# EUROPEAN PATENT APPLICATION

(11) **EP 3 591 011 A1**
(43) Date of publication of application: **08.01.2020**
(21) Application number: 18382493.7
(22) Date of filing: 03.07.2018
(51) Int. Cl.: C09D 1/02, C09D 7/61, C09D 7/40, C08K 3/14, C08K 3/38

(54) **PAINT COMPOSITION, PREPARATION AND USE THEREOF**

(71) Applicant: Fundación Tecnalia Research & Innovation, 20009 Donostia-San Sebastian, Guipuzcoa (ES)
(72) Inventor: BÁRCENA PEREDA, Jorge, 48160 Derio - Bizkaia (ES); GARCÍA DE CORTÁZAR, Maider, 20009 Donostia (ES); EGIZABAL LUZURIAGA, Pedro MarÍa, 20009 Donostia (ES); DÍAZ DE MENDIBIL BERMEJO, Andoni, 20730 Azpeitia (Gipuzkoa) (ES)
(74) Representative: Balder IP Law, S.L.

(57) **Abstract**

The present invention discloses an aqueous paint composition comprising inorganic nanoparticles, as silicon carbide and/or cubic boron nitride nanoparticles, and a silicate binder. The process for preparing the paint composition and the process for manufacturing a coated article are also disclosed. The present paint composition presents a high dispersibility directly after its preparation, and also when aged for a long period of time, and high emissivity and refractory properties. The present paint composition is suitable for the aerospace and the energy industry.

## Description

### FIELD OF THE INVENTION

The present invention relates to a high emissivity and refractory paint composition for highly efficient use of heat energy that can be applied to various types of substrates, and to simple and cost-effective processes for their manufacturing and application on substrates.

### BACKGROUND OF THE INVENTION

Increasing demand for energy and rising energy costs throughout the world have inevitably increased the need to save or conserve energy, particularly among industrial entities. In many instances, industries that use fired heaters or furnaces, such as refineries and petrochemical complexes, have attempted to maximize fired heater efficiency to thereby reduce fuel consumption. High emissivity coating technology has become a proven means for various high temperature applications to effectively increase radiant heat transfer and save energy without compromising process reliability and safe operation.

Emissivity can be broadly defined as the relative ability of a surface to emit energy by radiation. More particularly, emissivity can be defined as the ratio of energy radiated by a particular material to energy radiated by a blackbody at the same temperature. Higher emissivity corresponds to an increase in thermal efficiency. An increase in thermal efficiency attributed to high emissivity coatings in high temperature fired heater or furnace applications results in an increase in fired heater or furnace performance or output and/or a decrease in fuel consumption and overall energy demand.

The benefits and advantages of high emissivity coatings have led to various research and development efforts over the years to improve the performance of high emissivity coatings. In particular, research has been conducted to develop emissivity coating compositions that include emissivity enhancing agents ("emissivity agents") to a) enhance emissivity values in order to increase radiant heat transfer; b) improve coating adhesion on substrates; c) extend coating lifetime across multiple high temperature cycles; and d) reduce emissivity agent degradation.

There are known coating compositions prepared by using a mixture of silicon carbide and a binder. These compositions may be applied to, for example, the wall of an industrial furnace to improve its thermal efficiency. Most of these compositions include a variety of components such as alumina, or magnesium oxides, potassium hydroxide, potassium silicate and graphite and silicon carbide. However, the coatings formed by these compositions have a number of disadvantages.

In addition to the foregoing, although aspects of high emissivity coating performance with those compositions are being investigated and improved, existing processes for manufacturing and applying high emissivity coating compositions fail to appropriately consider or address certain manufacturing and economic aspects. In particular, while various efforts have been made to develop high emissivity coatings with better performance, such efforts have largely ignored or unavoidably increased the complexity of producing and applying such coating compositions and thus, also the end price of high emissivity coated products. Accordingly, there is a need for preparing, manufacturing, or formulating high emissivity coating compositions in a more efficient, simple and cost-effective manner.

The present invention discloses a paint composition based on silicon carbide and/or boron nitride nanoparticles which provides a high emissivity coating, and which after its simple preparation stays stable (nanoparticles do not aggregate with each other), presents a good dispersibility after long periods of time and can be easily applied by any person.

### DESCRIPTION OF THE DRAWINGS

**Figures 1****:** emissivity values calculated from the obtained reflectance values in the range of 2.5 to 45 µm for a steel substrate AISI 347.
**Figure 2****:** emissivity values calculated from the obtained reflectance values in the range of 2.5 to 45 µm for a new prepared first batch of a paint composition of the present invention applied with a brush to a steel substrate AISI 347.
**Figure 3****:** emissivity values calculated from the obtained reflectance values in the range of 2.5 to 45 µm for a new prepared first batch of a paint composition of the present invention applied with a spray gun to a steel substrate AISI 347.
**Figure 4****:** emissivity values calculated from the obtained reflectance values in the range of 2.5 to 45 µm for one year aged (aged) paint composition of the present invention prepared from a first batch applied with a brush to a steel substrate AISI 347.
**Figure 5****:** emissivity values calculated from the obtained reflectance values in the range of 2.5 to 45 µm for a new prepared second batch of a paint composition of the present invention applied with a brush to a steel substrate AISI 347.

### DESCRIPTION OF THE INVENTION

The present disclosure relates to the use of inorganic nanoparticles in a paint composition, methods for its preparation and its use to coat articles as defined in the appending claims.
The paint composition of the present invention shows good refractory properties and high emissivity, as high as 0.90, preferably as high as 0.94, more preferably as high as 0.98, and most preferably as high as 0.99. The paint composition of the invention withstands, for example, working conditions in high temperatures of about 1700ºC required in the aerospace or energy industries.
The high emissivity value is also substantially maintained over time, that is, typically the percentage of the high emissivity value reduction in one year is about 0.55% or lower, preferably about 0.50% or lower, more preferably 0.45% or lower, still more preferably 0.40% or lower, still more preferably 0.35% or lower, still more preferably 0.30% or lower, still more preferably 0.25% or lower, still more preferably 0.20% or lower and most preferably 0.15% or lower, such as 0.10% or lower.
Moreover, the paint composition presents another advantage as it can be easily applied on a surface directly after its manufacturing or, after standing for long periods of time, in which case the paint composition still shows good dispersibility, that is, it can be easily redispersed by simple shaking and does not need of any special instrument or trained technical person to recondition and apply the paint composition.

In the context of the present invention, and unless otherwise stated, the indicated percentages are always, expressed by weight with respect to the total weight of the paint composition.

In a first aspect the invention provides a paint composition comprising:
i) 25-85 wt% of water; and
ii) 15-75 wt% of a solid which comprises:
   a) a silicate binder; and
   b) nanoparticles selected from the group consisting of silicon carbide, cubic boron nitride and combinations thereof, which present an average particle size of 10 to 250 nm.

The paint composition of the present invention comprises a silicate binder. Suitable silicate binders are for example alkaline metal silicates, alkaline earth metal silicates, transition metal silicates, or post-transition metal silicates, for example potassium silicate, sodium silicate, lithium silicate and aluminium silicate and combinations thereof, preferably potassium silicate.

The paint composition of the present invention comprises inorganic nanoparticles which present a high temperature resistance and which are selected from the group of silicon carbide, cubic boron nitride and combinations thereof, preferably silicon carbide nanoparticles. These nanoparticles are commercially available or can be synthetized by methods known in the state of the art.

The average particle size of the inorganic nanoparticles is preferably comprised between 10 and 250 nm. The present inventors have observed that when the average particle size is higher than 250 nm the paint composition is less stable (nanoparticles easily precipitate) and for that reason, the dispersibility of the nanoparticles inside the paint composition is lower.
Thus the coating produced by the application of the paint composition on a substrate is less homogeneous and the wettability with the substrate is lower. Also an average particle size under 10 nm increases the toxicity of the paint composition, and is therefore less suitable for use in the present invention.

In some examples, the inorganic nanoparticles for use in the present invention are silicon carbide nanoparticles with an average particle size of 100 to 250 nm, preferably an average particle size of 125 to 225 nm, more preferably an average particle size of 150 to 200 nm.

In other examples, the inorganic nanoparticles for use in the present invention are silicon carbide nanoparticles with an average particle size of 10 to 55 nm, or for example between 20 and 40 or between 25 and 35.

In still some other examples, the inorganic nanoparticles for use in the present invention are cubic boron nitride nanoparticles with an average particle size of 140 to 200 nm, preferably 150 to 180 nm.

The paint composition, optionally comprises a surfactant in a weight percentage comprised between 0 to 10 %, particularly 2 to 8%, or 4 to 6%, for example 3%, or 5%, or 7%. Suitable surfactants for use in the composition can be non-ionic, cationic, anionic, zwitterion or combinations thereof.
Suitable non-limiting cationic surfactants are for example cetrimonium bromide (CTAB), cetylpyridinium chloride (CPC), benzalkonium chloride (BAC), benzethonium chloride (BZT), dimethyldioctadecylammonium chloride, and dioctadecyldimethylammonium bromide (DODAB).
Suitable non-limiting anionic surfactants are for example ammonium lauryl sulfate, docusate, sodium laurate, sodium laureth sulfate, and sodium stearate.
Suitable non-limiting zwitterion surfactants are for example lecithin, phosphatidylethanolamine, and cocamidopropyl hydroxysultaine.
Suitable non-limiting non-ionic surfactants are for example Polyoxyethylene (20) sorbitan monooleate (Tween 80), Polyoxyethylene (20) sorbitan monolaurate (Tween 20) and Octyl phenol ethoxylate (Triton-X-100).
Surfactants improve the dispersion and the stability of the paint composition.

The paint composition comprises water and a solid, wherein the solid comprises a silicate binder and inorganic nanoparticles as previously disclosed, and wherein the silicate binder and the inorganic nanoparticles can be present in different relative amounts. In this sense, the term solids mixture percentage, as used herein, indicates the relation between the dried silicate binder and the inorganic nanoparticles. The solid mixture percentage is calculated as (weight of nanoparticles)/(weight of dried silicate binder)*100.

In some examples, the paint composition comprises between 30 to 80 wt% of water and 20 to 70 wt% of the solid, preferably 35 to 75 wt% of water and 25 to 65 wt% of the solid, more preferably 55 to 65 wt% of water and 35 to 45 wt% of the solid with respect to the total weight of the paint composition.

In some examples, the nanoparticles and the silicate binder are present in a solids mixture percentage of 4 to 400%, preferably a solids mixture percentage of 10 to 300%, more preferably a solids mixture percentage of 20 to 200%, still more preferably a solids mixture percentage of 50 to 150%, and most preferably 100%.

The skilled person understands that all the above disclosed ranges and subranges of water wt%, solid wt%, average particle size of the nanoparticles and solids mixture percentage of the paint composition can be combined and that the resulting combinations are intended to be included in the scope of the present invention.

Thus in some examples, the paint composition comprises a silicate binder, preferably potassium silicate; inorganic nanoparticles, preferably silicon carbide, with an average particle size of 10 to 250 nm; and wherein the water and the solids amounts in the paint composition are comprised between 25 to 85 wt% of water and 15 to 75 wt% of a solid; and the solids mixture percentage is 4 to 400%.

In some other examples, the paint composition comprises a silicate binder, preferably a potassium silicate; inorganic nanoparticles, preferably silicon carbide, with an average particle size of 125 to 225 nm; and wherein the water and the solids amounts in the paint composition are comprised between 25 to 85 wt% of water and 15 to 75 wt% of a solid; and the solids mixture percentage is 4 to 400%.

In some other examples, the paint composition comprises a silicate binder, preferably a potassium silicate; inorganic nanoparticles, preferably silicon carbide, with an average particle size of 150 to 200 nm; and wherein the water and the solids amounts in the paint composition are comprised between 25 to 85 wt% of water and 15 to 75 wt% of a solid; and the solids mixture percentage is 4 to 400%.

In some other examples, the paint composition comprises a silicate binder, preferably a potassium silicate; inorganic nanoparticles, preferably silicon carbide, with an average particle size of 150 to 200 nm; and wherein the water and the solids amounts in the paint composition are comprised between 35 to 75 wt% of water and 25 to 65 wt% of a solid; and the solids mixture percentage is 4 to 400%.

In some other examples, the paint composition comprises a silicate binder, preferably a potassium silicate; inorganic nanoparticles, preferably silicon carbide, with an average particle size of 150 to 200 nm; and wherein the water and the solids amounts in the paint composition are comprised between 55 to 65 wt% of water and 35 to 45 wt% of a solid; and the solids mixture percentage is 4 to 400%.

In some other examples, the paint composition comprises a silicate binder, preferably a potassium silicate; inorganic nanoparticles, preferably silicon carbide, with an average particle size of 150 to 200 nm; and wherein the water and the solids amounts in the paint composition are 60 wt% of water and 40 wt% of a solid; and the solids mixture percentage is 50 to 150%.

In a particular embodiment, the paint composition comprises a silicate binder, preferably a potassium silicate; inorganic nanoparticles, preferably silicon carbide, with an average particle size of 150 to 200 nm; and wherein the water and the solids amounts in the paint composition are 60 wt% of water and 40 wt% of a solid; and the solids mixture percentage is 100%.

In some other examples, the paint composition comprises a silicate binder, preferably a potassium silicate; inorganic nanoparticles, preferably silicon carbide, with an average particle size of 10 to 55 nm; and wherein the water and the solids amounts in the paint composition are comprised between 25 to 85 wt% of water and 15 to 75 wt% of a solid; and the solids mixture percentage is 4 to 400%.
In some other examples, the paint composition comprises a silicate binder, preferably a potassium silicate; inorganic nanoparticles, preferably silicon carbide, with an average particle size of 10 to 55 nm; and wherein the water and the solids amounts in the paint composition are comprised between 35 to 75 wt% of water and 25 to 65 wt% of a solid; and the solids mixture percentage is 4 to 400%.

In some other examples, the paint composition comprises a silicate binder, preferably a potassium silicate; inorganic nanoparticles, preferably silicon carbide, with an average particle size of 10 to 55 nm; and wherein the water and the solids amounts in the paint composition are 60 wt% of water and 40 wt% of a solid; and the solids mixture percentage is 50 to 150%.

In a particular embodiment, the paint composition comprises a silicate binder, preferably a potassium silicate; inorganic nanoparticles, preferably silicon carbide, with an average particle size of 10 to 55 nm; and wherein the water and the solids amounts in the paint composition are 60 wt% of water and 40 wt% of a solid; and the solids mixture percentage is 100%.

In some other examples, the paint composition comprises a silicate binder, preferably a potassium silicate; inorganic nanoparticles, preferably cubic boron nitride, with an average particle size of 140 to 200 nm, preferably 150 to 180 nm; and wherein the water and the solids amounts in the paint composition are comprised between 25 to 85 wt% of water and 15 to 75 wt% of a solid; and the solids mixture percentage is 4 to 400%.

In some other examples, the paint composition comprises a silicate binder, preferably a potassium silicate; inorganic nanoparticles, preferably cubic boron nitride, with an average particle size of 140 to 200 nm, preferably 150 to 180 nm; and wherein the water and the solids amounts in the paint composition are comprised between 35 to 75 wt% of water and 25 to 65 wt% of a solid; and the solids mixture percentage is 4 to 400%.

In some other examples, the paint composition comprises a silicate binder, preferably a potassium silicate; inorganic nanoparticles, preferably cubic boron nitride, with an average particle size of 140 to 200 nm, preferably 150 to 180 nm; and wherein the water and the solids amounts in the paint composition are 60 wt% of water and 40 wt% of a solid; and the solids mixture percentage is 50 to 150%.

In a particular embodiment, the paint composition comprises a silicate binder, preferably a potassium silicate; inorganic nanoparticles, preferably cubic boron nitride, with an average particle size of 140 to 200 nm, preferably 150 to 180 nm; and wherein the water and the solids amounts in the paint composition are 60 wt% of water and 40 wt% of a solid; and the solids mixture percentage is 100%.

In another aspect the invention provides a process for the preparation of the paint composition of the present invention as previously disclosed which comprises the following steps:
a) mechanically mixing:
   i) 25-85 wt% of water; and
   ii) 15-75 wt% of a solid which comprises:
      a) a silicate binder; and
      b) nanoparticles selected from the group consisting of silicon carbide, cubic boron nitride and combinations thereof, which present an average particle size of 10 to 250 nm; and
b) applying ultrasounds to the resulting mixture obtained in step a).

The first step is performed by agitation, for example in a mechanical or magnetic stirrer, at a range typically between 800 to 1400 rpm, preferably 900 to 1300, more preferably at 1000 rpm, during a period of time that depends on the rpm, and which in general is comprised between 5 to 15 minutes, for example 8 to 12 minutes, or for example 10 minutes.

The second step is performed during a period of time which is typically of 1 to 5 minutes, for example 2 to 4 minutes, or for example 3 minutes, by applying ultrasounds with an ultrasounds instrument that has a power of for example 20 KHz in the resulting mixture. The ultrasounds program is chosen at a range of 50 to 80 % of the total power's instrument, preferably 55 to 75%, more preferably at 70% of the total power's instrument.
The resulting paint composition obtained after step b) presents high stability during long periods of time, for example one year, and can be re-dispersed manually by simple shaking without using any special equipment/instrument or a trained technical person.

In another aspect, the invention provides a process for manufacturing a coated article comprising the steps of:
a) applying the paint composition as previously disclosed or obtained by the process previously disclosed to the surface of an article to be coated in order to obtain a coating thereon;
b) drying the paint composition at a temperature of 18º to 30ºC;
c) curing at a temperature comprised between 90º to 110 ºC.

The application to the surface of an article is typically realized by techniques known in the state of the art such as application by brush, spraying gun, dip coating, spin coating, and combinations thereof. In the context of the present invention the application of the paint composition to the surface of an article may comprise the application to the whole surface of an article, or to one or more surfaces of an article, and also to a whole surface or to at least part of a surface.

The time of the drying step of the coating may vary depending on factors such as the thickness of the applied coating. Typically the drying step is performed during a time period comprised between 1 and 48 hours, for example 1 and 36 hours, or for example 1 and 24 hours

The time of the curing step c) is usually comprised between 1 and 4 hours. The curing step is typically realized at a temperature comprised between 90º to 110 ºC, for example 95º to 105 ºC, or for example 80º to 100ºC.

Optionally, the process for manufacturing a coated article further comprises a further curing step which is carried out at a temperature comprised between 222º to 262 ºC.

The time of the optional further curing step is usually comprised between 1 and 4 hours. The optional curing step is typically realized at a temperature comprised between 222º to 262 ºC, for example 220º to 260 ºC, or for example 215º to 250ºC.
Typically the resulting coating (herein also referred to as the cured paint composition) of the coated article shows a thickness which is comprised between 10 to 320 microns, for example between 15 to 200 microns, or for example 20 to 150 microns, or for more example 30 to 100 microns.

The present invention also relates to a coated article obtained by the process for its manufacturing as previously defined or which comprises an article and a cured paint composition comprising:
a) nanoparticles selected from the group consisting of silicon carbide, cubic boron nitride and combinations thereof, which present an average particle size of 10 to 250 nm; and
b) a silicate binder,
where the nanoparticles and the silicate binder are present in a solids mixture percentage of 4 to 400% ((weight of nanoparticles/weight of silicate binder)*100), preferably a solids mixture percentage of 10 to 300%, more preferably a solids mixture percentage of 20 to 200%, still more preferably a solids mixture percentage of 50 to 150%.

In a particular embodiment, the coated article comprises a cured paint composition comprising silicon carbide nanoparticles with an average particle size of 150 to 200 nm, potassium silicate and the nanoparticles and the potassium silicate are present in a solids mixture percentage of 100%.

The process for manufacturing a coated article of this invention is applicable to a wide variety of articles without any particular limitation, such as high temperature heat exchangers, space thermal protection shields, combustion chamber and extension nozzles for space launchers, first wall panels on fusion energy reactors, volumetric receivers on concentrated solar power (CSP), heat recovery systems, industrial furnaces used in the petroleum, petrochemical and steel industries, molds in cold box, pieces in gray iron, nodular iron, roof arches for heating furnaces, columns in combustion chambers and vehicles

In still a further aspect the invention relates to the use of the paint composition as above defined for coating an article.

The high emissivity of the cured paint composition obtained by the process for manufacturing a coated article as previously defined in the present invention is thermally and chemically stable. It has a high degree of volumetric stability at an elevated temperature (e.g., about 1,700°C in air environment) and a high level of thermal emissivity. It drastically improves the transfer of heat and increases the efficiency of energy utilization. In accordance with embodiments described herein it exhibits desirable emissivity, e.g. as high as 0.90, preferably as high as 0.94, more preferably as high as 0.98, and most preferably as high as 0.99. Also, the high emissivity value is substantially maintained over time, with high emissivity value reduction in one year about 0.55% or lower, preferably about 0.50% or lower, more preferably 0.45% or lower, still more preferably 0.40% or lower, still more preferably 0.35% or lower, still more preferably 0.30% or lower, still more preferably 0.25% or lower, still more preferably 0.20% or lower and most preferably 0.15% or lower, such as 0.10% or lower.

The stability of the emissivity for the cured paint composition on an article was tested using the paint composition of the invention (i) directly after its manufacturing, (herein also referred to as new prepared) and (ii) when it was one year long aged (that is one year after its manufacturing) and the results obtained were compared with the emissivity obtained for an unpainted article.
As it is demonstrated in the Example explained here below, the cured paint composition presents a high emissivity value which is independent from the application's technique used and the value remains stable for the aged paint composition.

The following examples are merely illustrative and should not be considered as limiting the invention.

### EXAMPLES

### Preparation of a paint composition

Two batches of paint composition were obtained as follows.
To 100 gr of a potassium silicate water-solution commercially available (IQE) with 25 wt% of solid potassium silicate, 25 gr of silicon carbide nanoparticles of 150 nm were added.
The mixture was first mechanically mixed by mechanical agitation at 1000 rpm, during 10 minutes. Secondly, the obtained mixture was treated under ultrasounds to disaggregate the nanoparticles. This step was performed during 3 minutes, by applying ultrasounds with an ultrasounds instrument that has a power of 20 KHz in the resulting mixture. The ultrasounds program was chosen at 70% of the total power's instrument. The paint composition as a fine dispersion was then obtained.

### Application of the paint composition and emissivity results

The paint composition of the Example was then applied to an AISI 347 steel substrate by spray gun or brush and then dried and cured.

The first batch of paint composition was directly, after its preparation, applied to an AISI 347 steel substrate by spray gun (new -spray gun - first batch) and by brush (new-brush-first batch), and then dried and cured. The same paint composition of the first batch was allowed to age during one year and then it was applied to an AISI 347 steel substrate by brush (aged-brush-first batch) and then dried and cured.

To determine repeatability the second batch of paint composition was directly after its preparation applied to an AISI 347 steel substrate by brush (new-brush-second batch) and then dried and cured.

After that, the emissivity of the obtained coated steel substrates were measured and compared for all the samples.

The measurements of the emissivity of the cured paint composition were realized *via* the measurements of the total reflectance in the mid-infrared. The measurements were made using a FTIR spectrometer "Spectrum 100" by Perkin Elmer, to which was added an integrating sphere integrator model of PIKE as a complement. The spectrometer was used as a radiation source and the integrating sphere was used as the complement for the measurement. The integrating sphere consists of a spherical surface with a diameter of 7.62 cm (3 inches) wherein the sphere is coated with gold to have a high reflectance in mid-infrared and a rough finish to have a lambertian reflectance in its interior. To carry out the measurements, it is necessary to cool down the mercury-cadmium telluride detector (MCT) with liquid nitrogen to avoid condensation of water in the measuring instrument.

To carry out the measurement, a previous calibration was carried out. For the calibration it was necessary to take a measurement of the bottom (without sample) and a reference (a gold sample) with a known high total reflectance.
The emissivity values calculated from the measurement of the reflectance are represented with a directional method (perpendicular to the substrate of the sample). As the value of the transmittance of a thin layer close to zero, it was determined that the emissivity is equal to the absorptivity for the same wavelength.

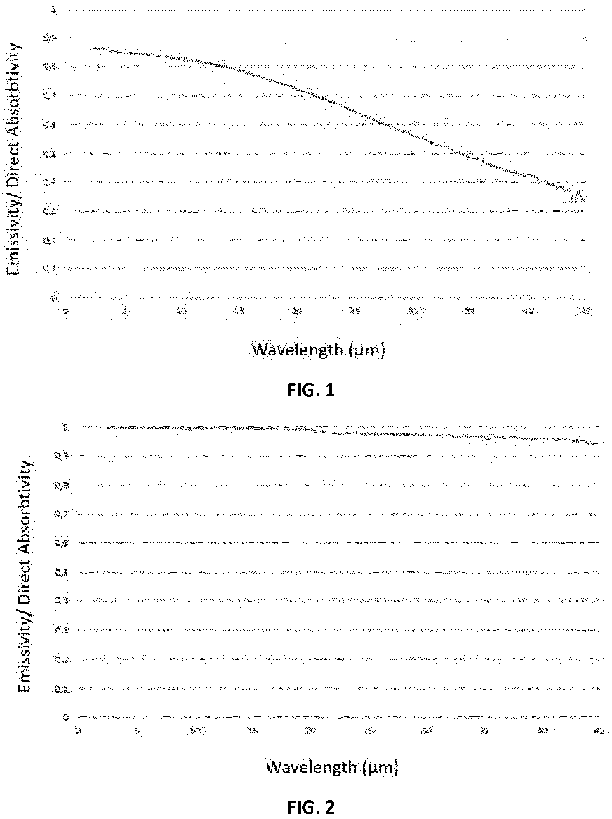

The values obtained for each of the different cured coating composition (with the paint composition used directly after its preparation (new) or with the paint composition used after one year aging (aged), and applied by spray-gun or by brush, on the steel substrate) in the range of 2.5 to 45 micrometers are shown in Figure 1 to 5.

For comparative purposes the emissivity of an unpainted steel substrate AISI 347 was also measured and it is shown in Figure 1.

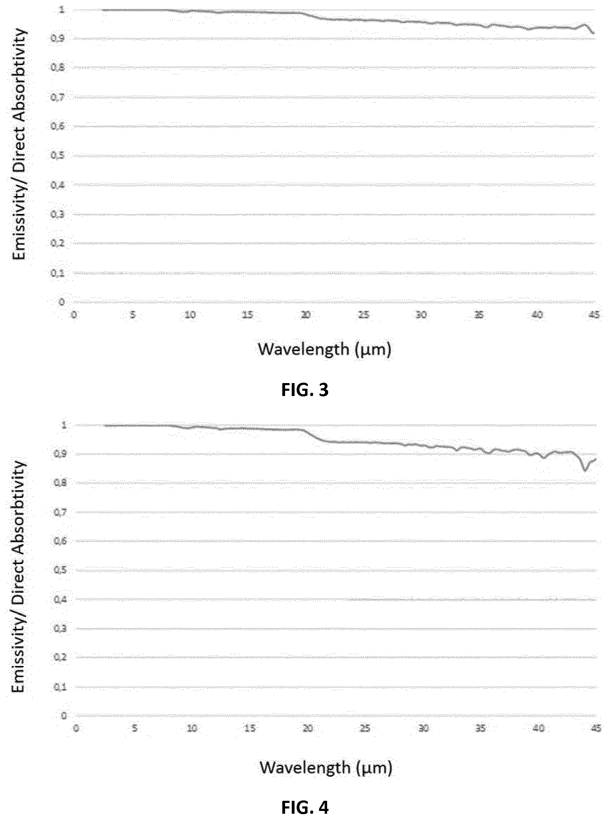

Figure 2 and Figure 3 show, respectively, the emissivity with the new paint composition from the first batch applied by spray gun (Figure 2) or applied by brush (Figure 3) on the steel substrate and then dried and cured.

Figure 4 shows the emissivity of the aged paint composition of the first batch applied by brush on the steel substrate and then dried and cured.

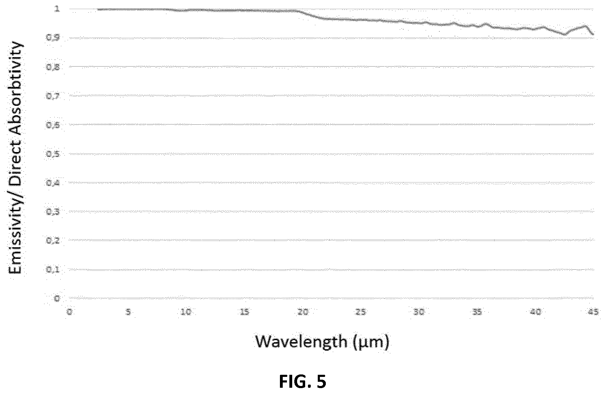

To determine the repeatability of the experiments, the second batch of new paint composition was applied with brush on the same type of substrate (new brush - second batch), and the emissivity results are shown in Figure 5.

As it can be observed in Figures 1 to 5, the difference of the emissivity values with the unpainted substrate is really remarkable, in comparison with the emissivity values of any of the painted samples. At 5 microns the emissivity value for the unpainted substrate is under 0.85, while the painted samples have an emissivity value of 0.99. At 40 microns the emissivity drops drastically from 0.85 to 0.42 for the unpainted substrate while the painted samples still have high emissivity values from 0.9 to 0.95.
In general it is observed that the values of emissivity of the painted samples are identical within the range of 2.5 - 20 micrometers, although the differences are very small in the range of 20 to 45 microns. Comparing Figure 3 (new-brush-first batch) and Figure 4 (aged-brush-first batch), it is observed that the coating using the one year aged paint composition presents an emissivity value of about 0.9 at 40 microns, which is still remarkably high.

## Claims

1. A paint composition comprising:
i) 25-85 wt% of water with respect to the total weight of the paint composition; and
ii) 15-75 wt% of a solid with respect to the total weight of the paint composition which comprises:
a) a silicate binder; and
b) nanoparticles selected from the group consisting of silicon carbide, cubic boron nitride and combinations thereof, which present an average particle size of 10 to 250 nm.

2. The paint composition according to claim 1, wherein the silicate binder is potassium silicate.

3. The paint composition according to claim 1 or 2, comprising 30 to 80 wt% of water and 20 to 70 wt% of a solid, preferably 35 to 75 wt% of water and 25 to 65 wt% of a solid, more preferably 55 to 65 wt% of water and 35 to 45 wt% of a solid with respect to the total weight of the paint composition.

4. The paint according to any one of previous claims, wherein the nanoparticles and the silicate binder are present in a solids mixture percentage of 4 to 400% ((weight of nanoparticles/weight of silicate binder)*100), preferably a solids mixture percentage of 10 to 300%, more preferably a solids mixture percentage of 20 to 200%, still more preferably a solids mixture percentage of 50 to 150%, and most preferably 100%.

5. The paint according to any one of previous claims, wherein the nanoparticles are silicon carbide nanoparticles with an average particle size of 100 to 250 nm.

6. The paint according to claim 5, wherein the silicon carbide nanoparticles have a particle size of 125 to 225 nm, preferably an average particle size of 150 to 200 nm.

7. The paint according to previous claims 1 to 4, wherein the nanoparticles are silicon carbide with an average particle size of 10 to 55 nm.

8. The paint according to previous claims 1 and 4, wherein the nanoparticles are cubic boron nitride nanoparticles with an average particle size of 140 to 200 nm, preferably 150 to 180 nm.

9. The paint composition according to any one of previous claims, comprising:
i) 55-65 wt% of water with respect to the total weight of the paint composition; and
ii) 35-45 wt% of a solid with respect to the total weight of the paint composition which comprises:
a) a potassium silicate binder; and
b) silicon carbide nanoparticles with an average particle size of 150 to 200 nm;
wherein the solids mixture percentage nanoparticles/silicate ((weight of nanoparticles/weight of silicate binder)*100) is 100%.

10. A process of preparing a paint composition according to any one of previous claims, which comprises the following steps:
I) mechanically mixing:
i) 25-85 wt% of water; and
ii) 15-75 wt% of a solid which comprises:
a) a silicate binder; and
b) nanoparticles selected from the group consisting of silicon carbide, cubic boron nitride and combinations thereof, which present an average particle size of 10 to 250 nm;
wherein the percentages are expressed with respect to the total weight of the paint composition; and
II) applying ultrasounds to the resulting mixture obtained in step I).

11. A process for manufacturing a coated article comprising the steps of:
a) applying the paint composition according to any one of claims 1 to 9 or prepared according to claim 10, to the surface of an article to be coated in order to obtain a coating thereon;
b) drying the paint composition at a temperature of 18º to 30ºC;
c) a curing step at a temperature comprised between 90º to 110 ºC.

12. A process for manufacturing a coated article according to claim 11, wherein the process comprises a further curing step carried out at a temperature comprised between 222º to 262 °C.

13. A coated article obtained by the process of claims 11 and 12, or which comprises an article and a cured paint composition comprising:
a) nanoparticles selected from the group consisting of silicon carbide, cubic boron nitride and combinations thereof, which present an average particle size of 10 to 250 nm; and
b) a silicate binder,
where the nanoparticles and the silicate binder are present in a solids mixture percentage of 4 to 400% ((weight of nanoparticles/weight of silicate binder)*100), preferably a solids mixture percentage of 10 to 300%, more preferably a solids mixture percentage of 20 to 200%, still more preferably a solids mixture percentage of 50 to 150%, and most preferably 100%.

14. A coated article according to claim 13, wherein the nanoparticles are silicon carbide nanoparticles with an average particle size of 150 to 200 nm, and wherein the potassium silicate and the nanoparticles are present in a solids mixture percentage ((weight of nanoparticles/weight of silicate binder)*100) of 100%.

15. Coated article according to claims 13 or 14, wherein the article is selected from the group consisting of high temperature heat exchangers, space thermal protection shields, combustion chamber and extension nozzles for space launchers, first wall panels on fusion energy reactors, volumetric receivers on concentrated solar power (CSP), heat recovery systems, industrial furnaces used in the petroleum, petrochemical and steel industries, molds in cold box, pieces in gray iron, nodular iron, roof arches for heating furnaces, columns in combustion chambers and vehicles.
